(19) Europäisches Patentamt
European Patent Office
Office européen des brevets

(11) **EP 4 270 376 A1**

(12) **EUROPEAN PATENT APPLICATION**

(43) Date of publication:
01.11.2023 Bulletin 2023/44

(21) Application number: 22275055.6

(22) Date of filing: 27.04.2022

(51) International Patent Classification (IPC):
*G10K 11/16* (2006.01)   *F01D 25/04* (2006.01)
*F02C 7/045* (2006.01)   *F02K 1/82* (2006.01)
*F02K 9/97* (2006.01)   *F42D 5/05* (2006.01)
*F42D 5/055* (2006.01)   *G10K 11/178* (2006.01)
*B64C 11/00* (2006.01)   *B64C 23/00* (2006.01)
*B64C 27/00* (2006.01)

(52) Cooperative Patent Classification (CPC):
**G10K 11/16; F01D 25/04; F02K 1/827; F42D 5/05;**
**F42D 5/055;** B64C 11/008; B64C 23/00;
B64C 27/001; F05D 2260/96; G10K 11/178

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **BAE SYSTEMS plc**
**London SW1Y 5AD (GB)**

(72) Inventor: **The designation of the inventor has not yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **ACOUSTIC BLACK HOLE, STRUCTURAL DAMPER, STRUCTURALLY DAMPED STRUCTURE**

(57)     There is provided an acoustic black hole comprising: in a first axis, a variation from a first characteristic to a second characteristic, along a line; in a second axis different to the first axis, a variation from a first characteristic to a second characteristic, along the second axis.

Fig. 7(b)

**Description**

FIELD

The present invention relates to an acoustic black hole, a structural damper, a structurally damped structure, and to a method of structural damping.

BACKGROUND

In product design, it is often necessary to design a product that is both lightweight and a low noise structure. However, this results in a conflict between reducing the weight and increasing the sound radiation from the structure. It is known to use a structure referred to as an acoustic black hole (ABH) to provide structural damping.

An acoustic black hole was originally described by Mironov in 1988 (M.A. Mironov. Propagation of a flexural wave in a plate whose thickness decreases smoothly to zero in a finite interval. Soviet Physics: Acoustics, 34(3):318-319, 1988). The acoustic black hole effect is typically achieved by introducing a power law taper into a beam or plate that changes the thickness over a set distance. This change in thickness profile causes the flexural waves propagating along the direction of the ABH to decrease in wave speed. In the theoretical limit, there is no reflection of the waves from the ABH. The ABH effect can also be achieved using other gradient functions, including a power-cosine curve, for example.

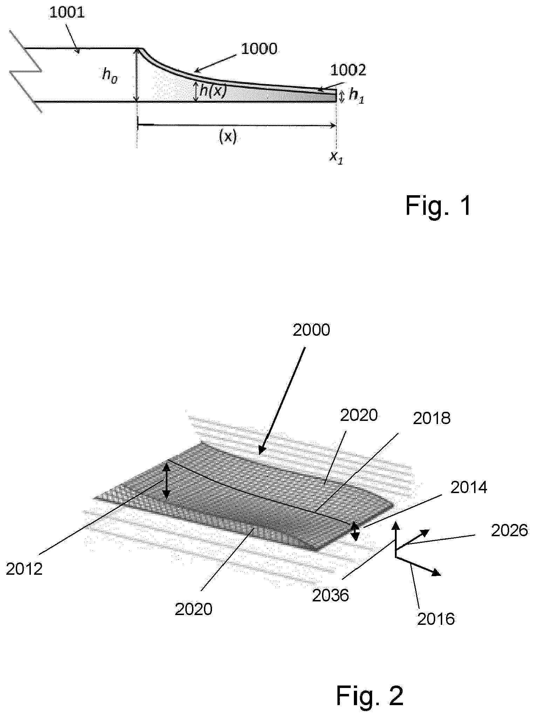

Figure 1 shows an example of an ABH 1000 on a beam 1001. The ABH 1000 is provided with a layer of damping material 1002. The flexural wave speed $c_f(x)$, decreases as the taper height decreases as:

$$c_f(x) = \left(\frac{Eh^2(x)}{12\rho_s}\right)^{\frac{1}{4}} \omega^{\frac{1}{2}}$$

$$(1)$$

where E is the Young's modulus of the ABH material, h(x) is the height of the taper, $\rho_s$ is the density of the ABH material and w is the angular frequency.

From Equation 1 it can be seen that if the tip of the ABH reduces to zero thickness, i.e. h(x)=0, then the flexural wave speed at the tip will be $c_f(x)$=0. In this ideal, theoretical case, the incident wave will not be reflected from the end of the tapered beam and will therefore, be effectively attenuated.

In this respect, acoustic black holes are known in the art. For example, Higher-order WKB analysis of reflection from tapered elastic wedges' Journal of Sound and Vibration 449 (2019) 368-388 (Angelis Karlos, Stephen J. Elliot, Jordan Cheer), the contents of which are incorporated herein, provides examples of different types of 'one-dimensional' acoustic black holes. The thickness variations, of these acoustic black holes, are according to the expressions provided in Table 1 below:

**Table 1**

| Thickness profile type | Thickness variation | Length of ideal wedge | Decay parameter |
|---|---|---|---|
| Power-law | $h = h_0\left(1 - \frac{x}{x_0}\right)^n$ | $x_0 = \frac{x_1}{1 - \left(\frac{h_1}{h_0}\right)^{1/n}}$ | - |
| Exponential | $h = h_0 e^{-\beta x}$ | $\infty$ | $\beta = \frac{1}{x_1 \ln\left(\frac{h_0}{h_1}\right)}$ |
| Power-cosine | $h = h_0 \cos^n\left(\frac{\pi x}{2x_0}\right)$ | $x_0 = \frac{\pi x_1}{2\arccos\left(\left(\frac{h_1}{h_0}\right)^{1/n}\right)}$ | - |
| Gaussian | $h = h_0 e^{-\gamma x^2}$ | $\infty$ | $\gamma = \frac{1}{x_1^2 \ln\left(\frac{h_0}{h_1}\right)}$ |
| Compound power-law | $h = \begin{cases} \frac{h_0}{2}\left(2 - \left(\frac{2x}{x_0}\right)^n\right), 0 \leq x \leq \frac{x_0}{2} \\ \frac{h_0}{2}\left(2 - \frac{2x}{x_0}\right)^n, \frac{x_0}{2} \leq x \leq x_0 \end{cases}$ | $x_0 = \frac{2x_1}{2 - \left(\frac{h_1}{h_0}\right)^{1/n}}$ | - |

where:

'x' is the distance, in the length direction, from the upstream end of the acoustic black hole (i.e. at the start of the taper);

'x1' is the length of the acoustic black hole;

'h' is the thickness of the acoustic black hole (at position (x));

'h0' is the thickness of the acoustic black hole at the upstream end of the acoustic black hole (i.e. at position (x = 0));

'h1' is the thickness of the acoustic black hole at the downstream end of the acoustic black hole (i.e. at position (x = x1));

'n' is power coefficient of the shape function (which must be greater or equal to 2).

These parameters are illustrated in Figure 1.

Conventional ABHs incorporate thickness tapering. The tip of the ABH is a weak point in the structure, due to its small thickness. As a result, the ABH will fatigue over time due to the vibrations that the tip is subjected to, and may be liable to breakage (such as the formation of cracks) or otherwise cease to function effectively.

Additionally, manufacturing ABHs having small thickness tip (zero thickness in the ideal case) is a challenge in manufacturing. An ABH having a finite tip height leads to reflection of the incident wave from the tip of the taper.

Furthermore, whilst ABHs in beams or planar structures have been developed, they have limited applications. For example, conventional ABHs are not suitable for incorporation in other (e.g., non-planar) structures. Previous developments have been focused on incorporating ABHs in straight beams and flat plates. To broaden the potential applications of ABHs, it is desirable to overcome this limitation.

It is one aim of the present invention, amongst others, to provide a improved acoustic black hole and/or structure and/or address one or more of the problems discussed above, or discussed elsewhere, or to at least provide an alternative acoustic black hole or structure.

SUMMARY

According to a first aspect of the present invention, there is provided an acoustic black hole comprising: in a first axis, a taper from a first thickness to a second thickness, along a line; in a second axis perpendicular to the first axis, and away from the line, one or more regions of different spatial property relative to a spatial property of the ABH at the line.

In one example, the one or more regions are regions of different thickness relative to a thickness of the ABH at the line.

In one example, the one or more regions are regions of increased thickness relative to a thickness of the ABH at the line.

In one example, the region of increased thickness has a thickness that is less than the first thickness.

In one example, the region of increased thickness has a thickness which is greater than the first thickness.

In one example, the one or more regions are regions of different shape relative to the shape of the ABH at the line, for example regions of different curvature relative to the curvature of the ABH at the line.

In one example, a surface profile of the acoustic black hole profile is defined by:

$$h_{mod} = h(x)M(x)$$

where $h_{mod}$ is the modified height profile, $h(x)$ is the unmodified height profile, and $M(x)$ is a modifier function, wherein:

$$h(x) = \left(\frac{l_{ABH} - x}{l_{ABH}}\right)^{\mu}\left(h_0 - h_{tip}\right) + h_{tip},$$

where $l_{ABH}$ is the length of the ABH taper, $\mu$ is the power law with which the thickness of the ABH decreases, x is the location in the first axis, $h_0$ is the height of the ABH at x = 0, and $h_{tip}$ is the finite height at the tip of the acoustic black hole, and wherein:

$$M(x) = -A \cos\left(\frac{\pi x^n}{l_{ABH}^n} - \frac{\pi}{2}\right) \cos\left(\frac{\pi y}{b} - \frac{\pi}{2}\right) + Am \cos\left(\frac{\pi x^n}{l_{ABH}^n} - \frac{\pi}{2}\right) + 1$$

where $A$, $n$, $m$ are scalar parameters, and $y$ is the width of the ABH in the second axis.

In one example, A is between 1 and 2, preferably 1.6, most preferably 1.6384. In one example, n is between 2 and 3, preferably 2.5, most preferably 2.4967. In one example, m is between 1 and 2, preferably 1.3, most preferably 1.2502.

In one example, the line is a centre line of the acoustic black hole.

In one example, the second axis is perpendicular to the first axis.

According to a second aspect of the present invention, there is provided an acoustic black hole comprising: in a first axis, a variation from a first characteristic to a second characteristic, along a line; in a second axis different to the first axis, a variation from a first characteristic to a second characteristic, along the second axis.

In one example, the variation in the first axis is an acoustic black hole taper.

In one example, in the second axis, the acoustic black hole comprises one or more regions of second characteristic.

In one example, in the second axis, the second characteristic is different to a characteristic at the line along said second axis.

In one example, the line is a centre line.

In one example, the characteristic a material characteristic, optionally: a different material; and/or a rigidity and/or density of the material.

In one example, in the second axis, the rigidity and/or density increases from a first value to a second value.

In one example, in the second axis, in a first direction and a second, opposite, direction, the rigidity and/or density increases from a first value to a second value.

In one example, the second axis is perpendicular to the first axis.

According to a third aspect of the present invention, there is provided a structurally damped structure the acoustic black hole according to the first aspect or second aspect; and a primary structure.

In one example, the primary structure is a beam or plate.

In one example, the primary structure comprises: in the first axis, zero curvature; in the second axis, at least a region of concave or convex curvature, or the primary structure comprises: in the first axis, zero curvature; in the second axis, at least a region of concave or convex curvature, wherein the ABH is provided as only a portion of the structurally damped structure in the second axis, or the primary structure comprises: in the first axis, at least a region of concave or convex curvature; in a second axis, at least a region of concave or convex curvature.

In one example, the second axis is perpendicular to the first axis.

In one example, the acoustic black hole according to the first or second aspect or structurally damped structure according to the third aspect comprises a damping material provided on at least a region of the acoustic black hole.

According to a fourth aspect of the present invention, there is provided a method of manufacture comprising the steps of: providing an acoustic black hole comprising, in a first axis, a taper from a first thickness to a second thickness, along a line; and providing, in a second axis perpendicular to the first axis, and away from the line, one or more regions of different spatial property relative to a spatial property of the ABH at the line.

According to a fifth aspect of the present invention there is provided a method of manufacture of an acoustic black hole comprising: using multi-layer additive manufacturing to provide: an acoustic black hole comprising: in a first axis, a variation from a first characteristic to a second characteristic, along a line; in a second axis different to the first axis, a variation from a first characteristic to a second characteristic, along the axis.

According to a sixth aspect of the present invention, there is provided a structural damper for providing structural damping to a primary structure comprising: an acoustic black hole according to the first aspect or the second aspect; at least one sensor; an actuator configured to apply an actuating force to the primary structure and/or to the acoustic black hole; and a controller configured to control the actuator in dependence on a signal from the at least one sensor so as to provide structural damping of the primary structure.

In one example, the controller is configured to control the actuating force applied by the actuator, to the primary structure and/or acoustic black hole, so as to control at least one of: (a) the vibration of the primary structure; (b) a flexural wave in the primary structure; (c) the acoustic radiation from the primary structure.

In one example, the controller is configured to control at least one of features (a) to (c) by controlling the vibration of the acoustic black hole and/or a flexural wave in the acoustic black hole.

In one example, the controller is configured to control the reflected flexural wave from the acoustic black hole.

In one example, the controller is configured to control the acoustic radiation from the primary structure.

In one example, the at least one sensor is an acoustic sensor configured to sense the acoustic radiation from the primary structure.

In one example, the acoustic black hole is provided with passive damping.

In one example, the actuator is configured to apply the actuating force to a structurally damped structure and/or structural damper at a different location to the acoustic black hole.

In one example, the at least one sensor comprises first and second sensors and the controller comprises a wave decomposition unit configured to decompose the signals from the first and second sensors into incident and reflected wave components.

In one example, the at least one sensor is configured to sense acoustic radiation from the primary structure and the controller is configured to calculate the radiated sound field from the primary structure.

In one example, the primary structure is a structure of a vehicle.

According to a seventh aspect of the present invention, there is provided a method of providing structural damping to a primary structure, using a structural damper, the structural damper comprising: an acoustic black hole according to the first aspect or second aspect; at least one sensor; and an actuator configured to apply an actuating force to the primary structure and/or acoustic black hole, wherein the method comprises controlling the actuator in dependence on a signal from the at least one sensor so as to provide structural damping of a primary structure.

In one example, the method comprises controlling the actuator to control at least one of: (a) the vibration of the primary structure; (b) a flexural wave in the primary structure; (c) the acoustic radiation from the primary structure.

According to an eighth aspect of the present invention, there is provided a kit of parts of a structural damper, the kit of parts comprising: an acoustic black hole according to the first aspect or second aspect, at least one sensor, an actuator for applying an actuating force to the acoustic black hole and/or to a primary structure; and a controller configured to control the actuator in dependence on a signal from the at least one sensor so as to provide structural damping of a primary structure.

According to a ninth aspect of the present invention, there is provided an acoustic black hole comprising: in a first axis, along a line, a variation from a first characteristic to a second characteristic to a third characteristic, wherein the acoustic black hole comprises a taper from the first characteristic to the third characteristic, and wherein the second characteristic is a deviation from the taper.

In one example, the first characteristic is provided in a first region, the second characteristic is provided in a second region, and the third characteristic is provided in a third region.

In one example, the characteristic is one or more of: the gradient; the rate of change of gradient; an increase in the gradient or rate of change of the gradient; zero gradient; a plateau; a peak.

In one example, the characteristic is a spatial property, optionally a thickness and/or shape.

In one example, the second thickness is greater than the first thickness and/or the third thickness.

In one example, the second characteristic deviating from the taper provides an increase in a fatigue resistance property of the acoustic black hole.

In one example, the characteristic is a material and/or a material property.

In one example, the material property is a rigidity and/or density.

In one example, in a second axis, perpendicular to the line, there is: no variation in the characteristic; variation in the characteristic.

In one example, the acoustic black hole has a circular form.

In one example, the second characteristic, or second region, is provided in an annular region.

According to a tenth aspect of the present invention, there is provided a structurally damped structure comprising: an acoustic black hole according to the ninth aspect; and a primary structure.

In one example, the primary structure is a plate.

In one example, the acoustic black hole according to the ninth aspect or structurally damped structure according to the tenth aspect further comprises a damping material provided on at least a region of the acoustic black hole.

According to an eleventh aspect of the present invention, there is provided a structural damper comprising: an acoustic black hole according to the ninth aspect; at least one sensor; an actuator configured to apply an actuating force to the primary structure and/or to the acoustic black hole; and a controller configured to control the actuator in dependence on a signal from the at least one sensor so as to provide structural damping of the primary structure.

Features of any of the aspects above may be combined, as desired or as appropriate.

BRIEF DESCRIPTION OF THE FIGURES

Embodiments of the invention will now be described by way of example only with reference to the figures, in which:

Figure 1 shows an acoustic black hole on a beam according to the prior art;
Figure 2 shows an acoustic black hole;

Figure 3 shows a structurally damped structure;
Figure 4 shows a plot of a modifier function;
Figure 5 shows a plot of an acoustic black hole surface profile;
Figure 6 shows a comparison of a measure of fatigue of an unmodified and a modified acoustic black hole;
Figure 7 shows an acoustic black hole;
Figure 8 shows general methodology principles;
Figure 9 shows a structurally damped structure comprising a primary structure and a structural damper;
Figure 10 shows a structurally damped structure comprising a primary structure and a structural damper;
Figure 11 shows a structurally damped structure comprising a primary structure and a structural damper;
Figure 12 shows a structurally damped structure comprising a primary structure and a structural damper;
Figure 13 shows a structurally damped structure comprising a primary structure and a structural damper;
Figure 14 shows a structurally damped structure comprising a primary structure and a structural damper;
Figure 15 shows a structurally damped structure comprising a primary structure and a structural damper;
Figure 16 shows a structurally damped structure comprising a primary structure and a structural damper.
Figure 17 shows an acoustic black hole cross section;
Figure 18 shows an acoustic black hole cross section;
Figure 19 shows an acoustic black hole;
Figure 20 shows a cross section through the acoustic black hole of Figure 19
Figure 21 shows a vehicle comprising an acoustic black hole, structural damper, and/or a structurally damped structure;
Figure 22 shows a structure comprising an acoustic black hole, structural damper, and/or a structurally damped structure; and
Figure 23 shows general methodology principles.

DETAILED DESCRIPTION

In the description which follows, acoustic black holes, structural dampers, structurally damped structures, and methods, are described.
The term "acoustic black hole" is used to refer to an element, member, or structure, which, in use, exhibits the acoustic black hole effect.
In the description herein, acoustic black holes comprise regions of taper. In some examples shown and described, the taper is a thickness taper. That is, the thickness of the acoustic black hole tapers (i.e., reduces or diminishes in thickness in a direction and along a line toward a point, line or region). However, in other examples, and in contrast to a thickness taper, the taper could also be a provided by a variation from a first characteristic to a second characteristic. This variation in characteristic may be referred to as a "functional taper" or a "functional grading". That is, the tapering could be a tapering function of the acoustic black hole, rather than a tapering thickness. For example, the variation may be a variation in material, material property, e.g. density and/or rigidity. That is, the tapering may be a tapering of material property. The material property may be, for example, density and/or rigidity. This may be achieved by use of additive layer manufacturing (e.g. 3D printing) to form an acoustic black hole having a tapering, graded, or varying, material property.
A variation from a first characteristic to a second characteristic includes a variation in a magnitude of a specific characteristic from a first to a second value, or a variation in a type of characteristic from a first to a second (different) type.
The term "structural damper" is used to refer to an arrangement, assembly or kit comprising an acoustic black hole and active control components (e.g., comprising a sensor, an actuator, and a controller).
The term "structurally damped structure" is used to refer to a structure, arrangement, assembly or kit comprising an acoustic black hole and a primary structure. The structurally damped structure may also comprise active control components (e.g., comprising a sensor, an actuator, and a controller). That is, the structurally damped structure may comprise a primary structure and a structural damper.
The term "primary structure" is used to refer to a structure that the acoustic black hole or structural damper is arranged to provide structural damping to. The primary structure is a structure that, in use, has a vibration applied to it. The primary structure may be a structure that is vibrated, directly or indirectly, by a source of vibration (e.g., an engine, fluid flow, etc.).
The acoustic black hole may be formed in or on the primary structure. For example, the acoustic black hole may be embedded in the primary structure. Alternatively, or additionally, the acoustic black hole may be coupled to the primary structure. That is, the acoustic black hole may be manufactured separately and coupled, or connected, to the primary structure.
In the embodiments described herein, the acoustic black hole is said to have a first axis and a second axis, and the primary structure is said to have a first axis and a second axis. Throughout, the first axis of the primary structure is parallel to the first axis of the acoustic black hole, and the second axis of the primary structure is parallel to the second axis of the acoustic black hole. The first axis of the primary structure may be the same as the first axis of the acoustic black hole, and the second axis of the primary structure may be the same as the second axis of the acoustic black hole.

In the embodiments described herein, the first axis and second axis are perpendicular. In this way, the acoustic black hole may comprise tapering (or variation) in directions parallel to, for example, the first axis, and no tapering (or variation), or tapering (or variation), in the second axis, the first and second axis being perpendicular. This may simplify construction, by avoiding construction or formation of tapering/varying features at relative angles. Nevertheless, in other embodiments, the first axis and second axis need not be perpendicular, which may lead to improvements in structural damping where vibrations emanate from multiple angles relative to the acoustic black hole.

Applicable to the structurally damped structure embodiments described herein, where the structurally damped structure is said to comprise a primary structure having a "region of curvature" in at least one of the first axis and second axis, the region of curvature may be about the acoustic black hole, surrounding the acoustic black hole and/or in proximity of the acoustic black hole. It will be appreciated that the whole of the primary structure may comprise curvature in at least one of the first axis and second axis. Thus, it is appropriate to refer to the primary structure comprising "at least a region" of curvature.

Referring to Figure 2, an acoustic black hole 2000 according to a first embodiment is shown.

The acoustic black hole comprises a taper 2010. The taper 2010 is a taper from a first thickness 2012 to a second thickness 2014. Said taper 2010 is in a first axis 2016. Said taper 2010 is along a line 2018.

The acoustic black hole 2000 comprises one or more regions 2020 of different spatial property relative to a spatial property of the acoustic black hole 2000 at the line 2018. Said one or more regions 2020 of different spatial property are away from the line 2018, and in a second axis 2026 which is perpendicular to the first axis 2016. Said one or more regions 2020 of different spatial property are away from the line 2018 and in the second axis 2026. As shown in the figures, the second axis 2026 is across the width of the acoustic black hole 2000.

Advantageously, by providing the one or more regions 2020 of different spatial property, the fatigue experienced within the acoustic black hole 2000 is reduced. Further advantageously, despite reducing fatigue, the reflection performance of the acoustic black hole 2000 is maintained. The stress experienced by the acoustic black hole at said regions 2020 of different spatial property is reduced, thus extending the fatigue life (i.e., the time which the ABH continues to function effectively) of the acoustic black hole 2000.

In a conventional ABH, regions of high stress may be concentrated in a "strip" across the taper 2010, that is, in the second axis 2026. Providing the one or more regions 2020 of different spatial property in the second axis 2026 increases the fatigue resistance of the acoustic black hole 2000 across the taper 2010.

The first thickness 2012 is greater than the second thickness 2014. The taper from the first thickness 2012 to the second thickness 2014 is such that the acoustic black hole 2000 exhibits the acoustic black hole effect due to the taper. That is, the first thickness 2012 is at the upstream end of the acoustic black hole 2000, and the second thickness 2014 is at the downstream end of the acoustic black hole 2000. As explained above, and well understood in the field, this change in thickness causes the flexural waves propagating along the direction of the ABH to decrease in wave speed.

The one or more regions of different spatial property may be provided at the outer edges, or sides, of the acoustic black hole 2000.

In this way, the acoustic black hole 2000 has improved fatigue resistance at the outer edges, or sides, of the acoustic black hole 2000, where conventional acoustic black holes may experience fatigue.

As shown in Figure 2, the line 2018 is a centre line 2018.The acoustic black hole 2018 is symmetric in the first axis 2016 either side of the line 2018. In this way, the acoustic black hole 2000 has improved fatigue resistance at both outer edges. Nevertheless, it will be appreciated that the acoustic black hole 2000 could be asymmetric either side of the line 2018, whilst still providing one or more regions of different spatial property away from the line 2018 in the second axis 2026. The fatigue resistance of the acoustic black hole 2000 can still be improved in this way.

The one or more regions 2020 are regions of different thickness relative to a thickness of the acoustic black hole 2000 at the line 2018. That is, the spatial property is thickness. The thickness is measured in a third axis 2036. The third axis 2036 is orthogonal to the first axis 2016 and the second axis 2026.

In this way, the fatigue resistance of said regions 2020 is different to the fatigue resistance of the acoustic black hole 2000 at the line 2018.

The one or more regions 2020 are regions of increased thickness relative to a thickness of the acoustic black hole 2000 at the line 2018.

In this way, the acoustic black hole 2000 is strengthened at said regions 2020. Fatigue resistance is thereby improved. Stress at said regions 2020 will be reduced.

In one example, where the one or more regions 2020 are regions of increased thickness relative to a thickness of the acoustic black hole 2000 at the line 2018, the thickness 2031 of the region 2020 may be less than the first thickness 2012. A profile of this thickness variation is illustrated in Figure 2.

By this construction, the acoustic black hole 2000 has an advantageous thickness profile which leads to improved fatigue resistance and reduction in stress at said regions.

In another, non-illustrated, example, where the one or more regions 2020 are regions of increased thickness relative to a thickness of the acoustic black hole 2000 at the line 2018, the thickness 2041 of the region 2020 may be greater than the first thickness 2012.

By this construction, the acoustic black hole 2000 has an advantageous thickness profile which leads to improved fatigue resistance and reduction in stress at said regions.

In an example not illustrated in the figures, the one or more regions 2020 are regions of different shape relative to the shape of the acoustic black hole 2000 at the line. That is, the spatial property is the shape of the acoustic black hole 2000.

In this way, the acoustic black hole effect may be altered at said regions, e.g., at outer regions, edges or sides of the acoustic black hole 2000, whilst improving the fatigue resistance of the acoustic black hole 2000.

The one or more regions 2020 may be regions of different curvature relative to the curvature of the acoustic black hole 2000 at the line. That is, the regions may have an increased curvature, and may curve upwards in the third axis 2036, to form a saddle-like shape.

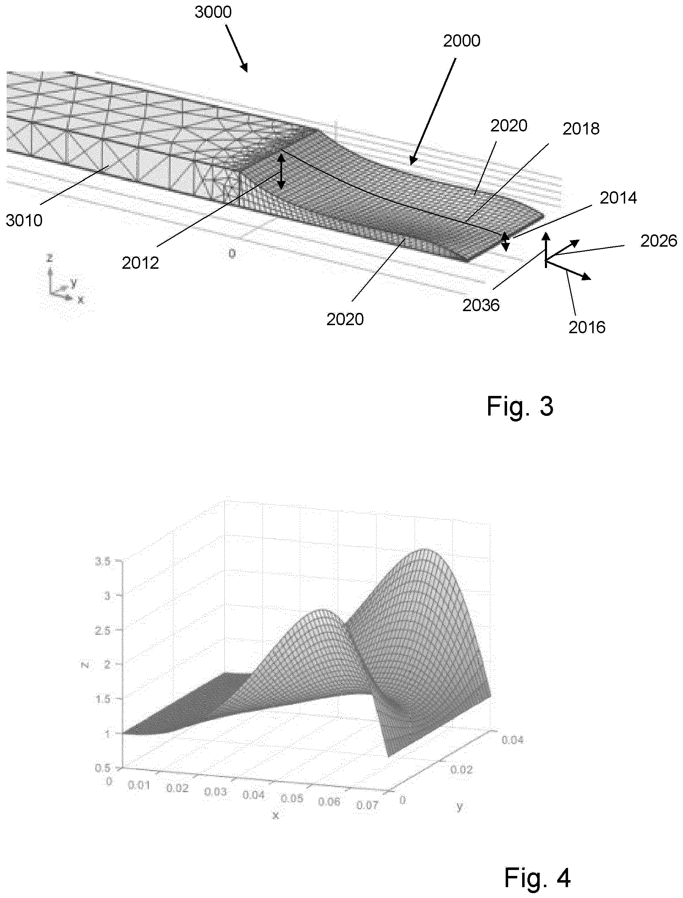

The geometry of the acoustic black hole 2000 will herein be described in greater detail. Referring to Figure 3, a structurally damped structure 3000 according to a first embodiment is shown. The structurally damped structure 3000 comprises the acoustic black hole 2000 and a primary structure 3010. The primary structure 3010 is in the form of a beam 3010. The beam 3010 has a rectangular cross section. The structurally damped structure 3000 may be described as a primary structure 3010 comprising the, or an, acoustic black hole 2000.

The cross-sectional dimension of the beam 3010 is equal to $b \times h_0$ where $b$ is the width of the beam (i.e., in the second axis 2026) and $h_0$ is the beam height or thickness (i.e., in the third axis 2036). The cross-sectional dimension of the beam 3010 is constant along its length (i.e., in the first axis 2016).

The height profile of the acoustic black hole will be described. It will be appreciated that whilst the height profile is described (i.e., the height of the tapering surface of the acoustic black hole), in practice this relates to thickness of the acoustic black hole where the thickness is defined as the vertical distance from a zero value in the third axis 2036 to the value of the height $h$. In an unmodified acoustic black hole (i.e., absent one or more regions 2020), the height profile varies with distance along its length (i.e., in the first axis 2016) according to:

$$h(x) = \left( \frac{l_{ABH} - x}{l_{ABH}} \right)^{\mu} \left( h_0 - h_{tip} \right) + h_{tip},$$

$$(2)$$

where $l_{ABH}$ is the length of the ABH taper, $\mu$ is the power law with which the thickness of the acoustic black hole 2000 decreases, x is the width of the acoustic black hole in the first axis 2016, $h_0$ is the height of the ABH at x = 0, and $h_{tip}$ is the finite height at the tip of the acoustic black hole. The origin of the first axis 2016 is at the junction of the beam 3010 and the acoustic black hole 2000.

Exemplary values of the parameters above are as given below in Table 2:

**Table 2**

| Parameter | Symbol | value(range of values) |
|---|---|---|
| Beam height | $h(0)$ | 10 mm |
| Beam length | $l_{beam}$ | 300 mm |
| Beam width | $b$ | 40 mm |
| ABH length | $l_{ABH}$ | 70 mm |
| ABH tip height | $h_{tip}$ | 0.6 mm |
| ABH power law | $\mu$ | 4 (1-10) |

The surface profile of the acoustic black hole 2000 comprising regions 2020 is defined by:

$$h_{mod} = h(x)M(x)$$

$$(3)$$

where $h_{mod}$ is the modified height profile, $h(x)$ is the unmodified height profile given above, and $M(x)$ is a modifier function.

The modifier function M(x) is defined as:

$$M(x) = -A \cos\left(\frac{\pi x^n}{l_{ABH}^n} - \frac{\pi}{2}\right)\cos\left(\frac{\pi y}{b} - \frac{\pi}{2}\right) + Am \cos\left(\frac{\pi x^n}{l_{ABH}^n} - \frac{\pi}{2}\right) + 1$$

$$(4)$$

where *A, n,* m are scalar parameters, and y is the width of the acoustic black hole 2000 in the second axis 2026. A allows the amplitude, or thickness, of the regions 2020 to be changed. n changes the position of the regions 2020. When m = 1, the centre line of the ABH taper is unchanged by the modifier function, which advantageously preserves the reflection performance. As m increases above 1 this part of the taper increases in thickness. For the avoidance of doubt, regardless of the parameter values used, M(x) is equal to 1 at both the junction of the acoustic black hole 2000 and the beam 5010 and also at the tip of the acoustic black hole 2000. The modifier function M(x) is plotted in Figure 4.

Optimal values of the parameters *A, n,* m have been determined (using a cost function) to minimise the maximum fatigue in the structure, while only allowing a small increase in reflection coefficient. The following optimal parameter values have been determined:

A between 1 and 2, preferably 1.6, most preferably 1.6384;

n between 2 and 3, preferably 2.5, most preferably 2.4967; and

m between 1 and 2, preferably 1.3, most preferably 1.2502.

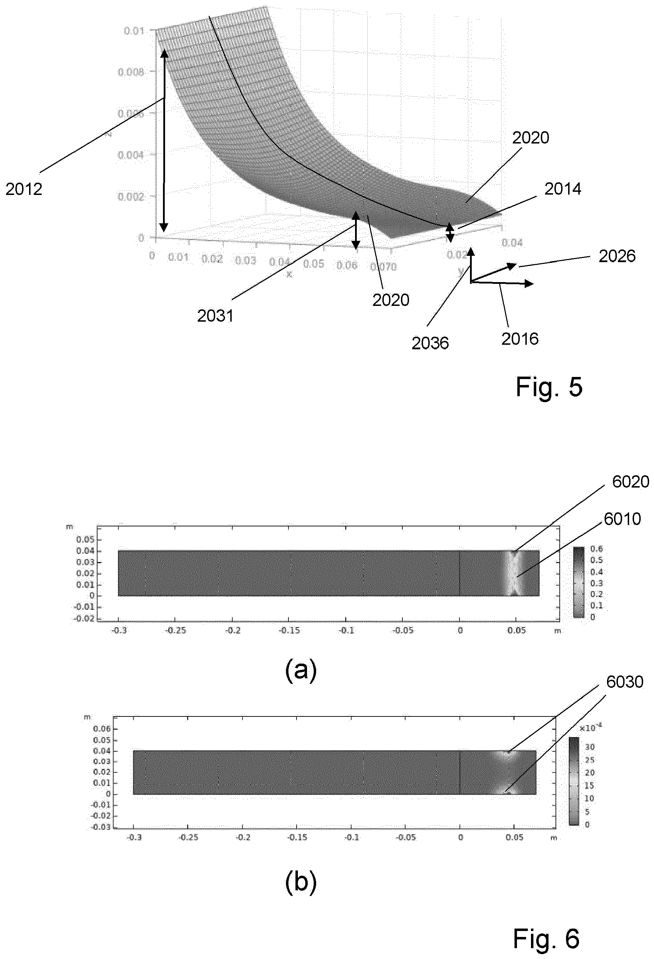

The modified height profile $h_{mod}$, having the above most preferable parameter values, is plotted in Figure 5. As explained above, whilst Figure 5 refers to height, it can be understood as proportional to thickness of the acoustic black hole 2000.

Referring to Figure 6, a measure of fatigue of an unmodified acoustic black hole (Figure 6(a)) is compared with a measure of fatigue of a modified acoustic black hole 2000 having regions of different spatial property, in particular regions 2020 of increased thickness. As can be seen from Figure 6(a), a band of stress 6010 extends across the acoustic black hole, with areas 6020 of high stress at the side regions of the acoustic black hole. As can be seen from Figure 6(b), in the modified acoustic black hole 2000, the stress is localised in regions 6030 of the acoustic black hole, but the magnitude of the stress is considerably lower than in the unmodified case. The acoustic black hole 2000 is thus stronger, more resilient, less liable to breakage, and will function effectively for longer periods of time.

In the example described above, the primary structure is a beam 3010. However, in other examples, the primary structure may have other forms. For example, the primary structure may be a plate. That is, the structurally damped structure may comprise a primary structure in the form of a plate, and an acoustic black hole according to the above-described embodiment.

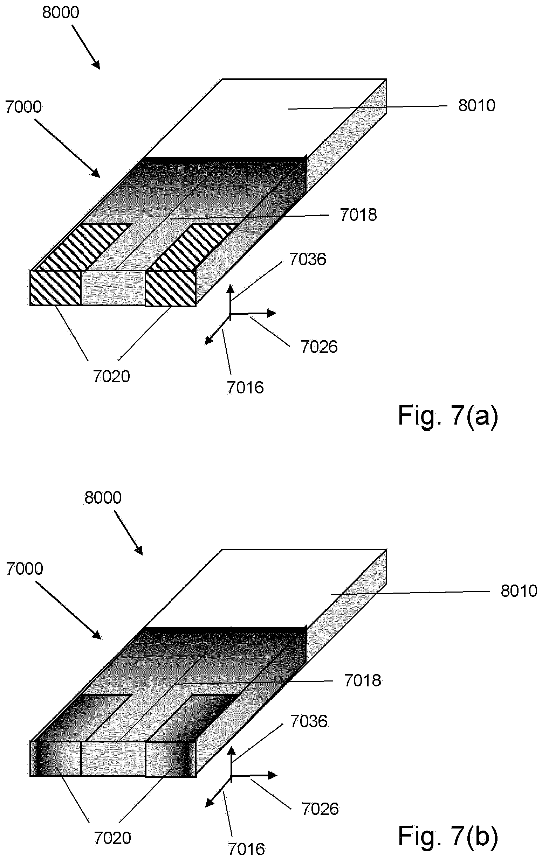

Referring to Figures 7(a) and 7(b), an acoustic black hole 7000 according to a second embodiment is shown. In the second embodiment, the acoustic black hole effect is provided by a variation from a first characteristic to a second characteristic. This variation may be referred to as a "functional taper" or a functional grading". That is, the tapering could be a tapering function of the acoustic black hole, rather than a tapering thickness. For example, the variation may be a variation in material, material property, e.g. density and/or rigidity. That is, the tapering may be a tapering of material property. The material property may be, for example, density and/or rigidity. This may be achieved by use of additive layer manufacturing (e.g. 3D printing) to form an acoustic black hole having a tapering, graded, or varying, material property.

Similarly, in a direction across the acoustic black hole 7000 (i.e., in the second axis 7026), there is also a variation from a first characteristic to a second characteristic. This variation provides for a different fatigue resistance characteristic at, or towards, the outer edges or sides of the acoustic black hole 7000. In this way, the acoustic black hole 7000 is strengthened at or towards the sides to improve fatigue life.

In overview, in the acoustic black hole 7000, in a first axis, the acoustic black hole 7000 is configured to exhibit the acoustic black hole effect, and in a second axis, the acoustic black hole 7000 is configured to have a variation in fatigue resistance characteristic. In this way, the acoustic black hole 7000 is operable to damp vibrations, and has improved fatigue resistance at the outer regions, where conventional ABHs are liable to failure due to high stresses. In addition, the acoustic black hole 7000 can function to exhibit the acoustic black hole effect without a physical taper to a small thickness, and thus retain structural integrity and fatigue resistance. In addition, the variation in the second axis further improve the structural integrity and fatigue resistance of the acoustic black hole.

In some embodiments, the variation in the first axis is a thickness taper (as in conventional ABHs), but the variation in the second axis is provided by a variation in material characteristic. Conversely, in other embodiments, the variation in the first axis is a variation in material characteristic, but the variation in the second axis is provided by a variation in material thickness or even shape, which may be an increase in material thickness or change in shape so as to strengthen the acoustic black hole at regions toward the sides of the acoustic black hole.

The acoustic black hole 7000 comprises a variation from a first characteristic to a second characteristic. Said variation is in a first axis 7016. Said variation is along a line 7018. The variation in the first axis 7016 along the line 7018 is such that the acoustic black hole effect is realised. That is, the variation in the first axis 7016 along the line 7018 causes the flexural waves propagating along the direction of the ABH to decrease in wave speed.

The acoustic black hole 7000 comprises a variation from a first characteristic to a second characteristic along a second axis 7026 different to the first axis 7016. In the illustrated example, the second axis 7026 is perpendicular to the first axis 7016. In the second axis, the first characteristic may be at the line 7018, and the second characteristic may be away from the line 7018. The second characteristic may be at, or toward, the outer edges, or sides, of the acoustic black hole 7000. As shown in the figures, the second axis 7026 is across the width of the acoustic black hole 7000. Regions 7020 of the acoustic black hole 7000 in the second axis 7026 may have the second characteristic.

Advantageously, by providing a variation in characteristic along the second axis, the fatigue experienced within the acoustic black hole 7000 is reduced. Further advantageously, despite reducing fatigue, the reflection performance of the acoustic black hole 7000 is maintained. The stress experienced by the acoustic black hole at said regions 7020 of different spatial property is reduced, thus extending the fatigue life (i.e., the time which the ABH continues to function effectively) of the acoustic black hole 7000.

The first characteristic in the second axis may be referred to as a "third characteristic". The second characteristic in the second axis may be referred to as a "fourth characteristic".

The variation in the second axis 7026 may be sudden, abrupt, or delineated by a boundary. This is illustrated in Figure 7(a). That is, a region in the proximity of the line 7018 has a first characteristic, and away from the line, regions toward the side of the acoustic black hole 7000 have a second characteristic, but there is no graduation between the first and second characteristic.

Alternatively, the variation in the second axis 7026 may be graduated. This is illustrated in Figure 7(b). That is, away from the line 7018, there is a gradual variation from a first characteristic to a second characteristic.

The characteristic may be a material characteristic. The material characteristic may be a type of material. That is, the variation may be a variation in type of material, for example materials with different properties. The material characteristic may be density and/or rigidity. In this way, the fatigue resistance of the acoustic black hole may be improved by providing a different material, or material having a different material characteristic, along the second axis.

In a particularly advantageous embodiment, in the second axis, the rigidity and/or density increases from a first value to a second value. The increase in value thus strengthens the acoustic black hole away from the line, leading to improved fatigue resistance. In the second axis, and in a first direction and a second, opposite, direction, the rigidity and/or density increases from a first value to a second value. That is, the acoustic black hole may have improved fatigue resistance toward both sides of the acoustic black hole.

As shown in the figures, the second axis 7026 is across the width of the acoustic black hole 7000. This is a good implementation, for the reasons discussed (e.g. the different stresses across this width, and a need to accommodate or factor for this). However, in some examples, the second axis and related variation in material characteristic could be through the thickness of the ABH (e.g. not just along or across, or not just along or across the ABH). This alternative or additional approach might give better or different control of ABH functionality or performance.

Figures 7(a) and 7(b) also show a structurally damped structure 8000 according to a second and third embodiment comprising an acoustic black hole 7000 and a primary structure 8010. The primary structure 8010 is in the form of a beam 8010. However, it will be appreciated that the primary structure 8010 may have other forms, for example a plate. The plate may be a flat or curved plate.

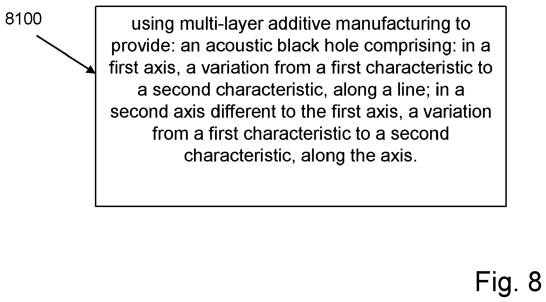

Referring to Figure 8, a method of manufacture of an acoustic black hole 7000 is shown. The method comprises using a multi-layer additive manufacturing process. Multi-layer additive manufacturing can be used to build up the acoustic black hole in a layer-by-layer manner to form variations in first and second axes. Importantly, a material of different characteristic (e.g. rigidity/ density) can be deposited or provided in the second axis to provide a variation in characteristic in the second axis. This allows a material of higher density or rigidity to be provided regions toward the side of the acoustic black hole. In this way, fatigue resistance can be improved. Additionally, a physical tapering or shaping of the acoustic black hole is not necessary, thus improving structural integrity, and simplifying manufacture. Step 8100 comprises using multi-layer additive manufacturing to provide: an acoustic black hole comprising: in a first axis, a variation from a first characteristic to a second characteristic, along a line; in a second axis different to the first axis, a variation from a first characteristic to a second characteristic, along the axis.

In perhaps a more general sense, an additive manufacturing allows for the material or materials to be provided in a very controlled, discretized manner. This allows for a very high degree of control of spatial and functional structural properties, for the same or different materials used in the manufacture of the ABH or related apparatus.

For similar reasons, the use of additive manufacturing could be advantageous when manufacturing an ABH having different spatial properties (e.g. thickness, shape) in a particular axis.

Applicable to all embodiments of structurally damped structures described herein (e.g., structurally damped structure 3000, 8000), the primary structure in which the acoustic black hole (according to any embodiment described herein) is provided, incorporated, or otherwise connected to, may comprise curvature. That is, the primary structure may be a plate or beam with at least a region of curvature in an axis.

In one example, the primary structure comprises, in the first axis 2016, 7016, zero curvature, and in the second axis 2026, 7026, a region of concave curvature. The primary structure may surround the acoustic black hole. The acoustic black hole may be embedded in the primary structure. Such as structurally damped structure may be usable as a curved panel.

In one example, the primary structure comprises, in the first axis 2016, 7016, zero curvature, and in the second axis 2026, 7026, a region of convex curvature. In this case, the acoustic black hole may be provided as only a portion of the structurally damped structure in the second axis. The primary structure may surround the acoustic black hole. The acoustic black hole may be embedded in the primary structure. Such as structurally damped structure may be usable as a annular panel, wherein the acoustic black hole is provided as only a portion of the annulus.

In one example, the primary structure comprises, in the first axis 2016, 7016, a region of concave or convex curvature, and in the second axis 2026, 7026, a region of concave or convex curvature. The primary structure may surround the acoustic black hole. The acoustic black hole may be embedded in the primary structure. Such as structurally damped structure may be usable as a curved panel.

Applicable to all embodiments described herein, an acoustic black hole may comprise a damping material provided on at least a region of the acoustic black hole. The damping material is provided on the surface of the acoustic black hole. Where the acoustic black hole comprises tapering, the damping material may be provided on the tapering surface of the acoustic black hole. The damping material may be provided on the whole of the acoustic black hole. The damping material may be a viscoelastic layer applied to at least one of the sides of the acoustic black hole. The damping material may be a thin layer.

In the embodiments described below, structural dampers and structurally damped structures are described. Each structurally damped structure comprises a primary structure and structural damper comprising an acoustic black hole.

The structural dampers described below are arrangements, assemblies or kits comprising an acoustic black hole and active control components (e.g., comprising a sensor, an actuator, and a controller). The structural damper may otherwise be referred to as an "active acoustic black hole". A structural damper may be any arrangement described below in absence of the primary structure. Advantageously, by the provision of regions of different spatial property, or the variation in characteristic, in combination with the active control components, an improved arrangement is provided. The acoustic black hole is more fatigue resistant, allowing the active control to be greater, and with reduced risk of breakage of the acoustic black hole by the application of large forces to the acoustic black hole. The acoustic black hole is more resistant to the stresses applied to the acoustic black hole by the active control components.

The structurally damped structures described below are structures, arrangements, assemblies, or kits, each comprising a primary structure and a structural damper. The structurally damped structures are configured to provide structural damping of a primary structure.

In the embodiments described below, whilst structurally damped structures are shown and described to comprise an acoustic black hole 2000 of the type shown and described in relation to Figure 2, it will be appreciated by the person skilled in the art that any embodiment of an acoustic black hole described herein can be incorporated in the structurally damped structures.

Similarly, whilst structurally damped structures are shown and described to comprise a primary structure of the type shown and described in relation to Figure 2, it will be appreciated by the person skilled in the art that any primary structure described herein can be incorporated in the structurally damped structures.

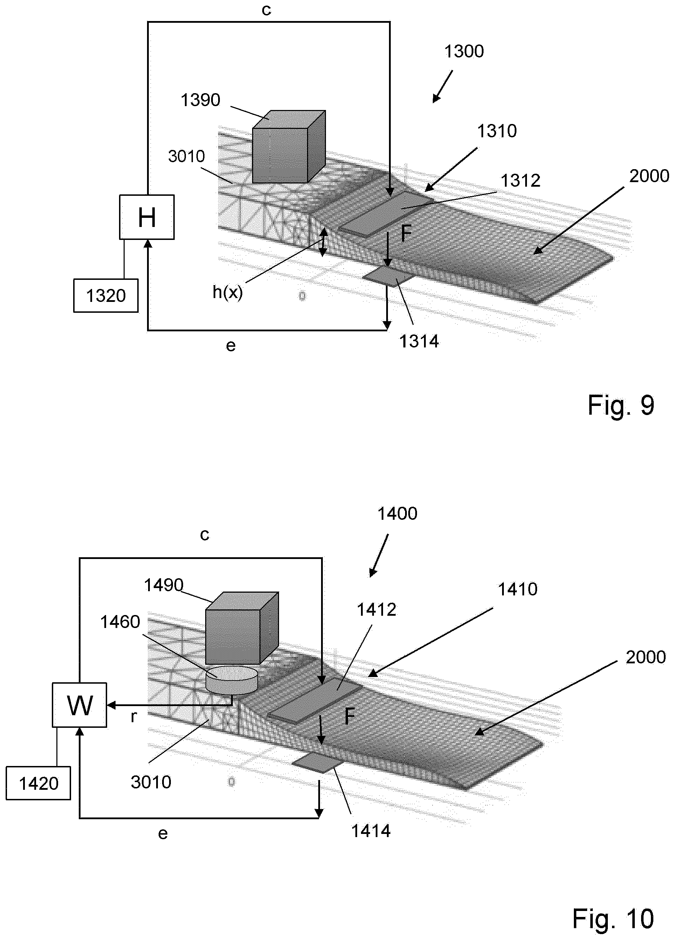

The primary structure may be attached or otherwise connected to a vibration source 1390 (shown schematically in Figures 9 to 16 which, in this case, is an engine. The vibration source 1390 produces a vibratory excitation force (V) on the primary structure, which induces vibration and flexural waves in the primary structure. This also causes the primary structure to emit acoustic radiation, i.e., noise.

Each acoustic black hole described herein comprises a tapering thickness (h), whereby the thickness (h) of the acoustic black hole decreases according to the following power law profile:

$$h(x) = h_0 \left(1 - \frac{x}{x_0}\right)^{\mathrm{n}}$$

(5)

where the variables in Equation 5 are as defined for Table 1 (and Figure 1).

The change in thickness profile causes the flexural waves to decrease in wave speed along the acoustic black hole, thereby reducing the reflection of the flexural waves from the acoustic black hole and so effectively providing attenuation of the flexural waves.

However, it will be appreciated that any type of acoustic black hole may be used, including those with different tapering profiles to Equation 5 above, provided features of the acoustic black hole are consistent with the description herein.

Referring to Figure 9, a structurally damped structure 1300 according to a fourth embodiment is shown. The structurally damped structure 1300 is configured to provide structural damping of the primary structure 3010.

The acoustic black hole 2000 is provided with an actuator 1310 configured to apply an actuating force to the acoustic black hole 2000. In this exemplary embodiment, the acoustic black hole 2000 is provided with upper and lower piezo-electric transducer (PZT) patches 1312, 1314 on its upper and lower surfaces 1316, 1318 respectively.

The upper and lower PZT patches 1312, 1314 are each of a material that has an intrinsic level of damping and so provide passive damping at the acoustic black hole 2000. In this manner, the upper and lower PZT patches 1312, 1314 may replace the damping material.

The lower PZT patch 1314 acts as a sensor that senses the movement of the acoustic black hole 2000. In this respect, the movement of the ABH 2000 acts to deform the PZT patch 1314, which causes a voltage to be induced across the PZT patch 1314 that is representative of the deformation. The PZT patch 1314 is connected to a controller (H) (shown schematically in Figure 9) such that the voltage induced across the PZT patch 1314 is passed to the controller (H), forming an error signal (e) that is fed back to the controller (H) (i.e. a feedback signal).

The upper PZT patch acts as an actuator 1312 configured to apply an actuating force (F) to the acoustic black hole 2000.

The controller (H) is connected to an electrical power supply 1320 (shown schematically in Figure 9) and has an output that is connected to the upper PZT patch 1312.

The controller (H) is configured to produce a control signal (c), in the form of an output voltage, that is applied across the upper PZT patch 1312, in dependence on the error signal (e).

The voltage applied to the upper PZT patch 1312 causes it to deform (i.e. through expansion or contraction) to apply an actuating force (F) to the acoustic black hole 2000. In this respect, energy is input from the actuator 1312 into the acoustic black hole 2000.

The actuating force (F) is parallel to the plane of the flexural waves that travel along the primary structure 3010 due to excitation by the vibration source 1390.

The controller (H) is configured to control the upper PZT patch 1312 (i.e. the actuator) in dependence on the received error signal (e) so as to provide structural damping of the primary structure 3010.

In this respect, the controller (H) controls the actuating force (F) applied by the upper PZT patch 1312, to the acoustic black hole 2000, so as to attenuate (in this case minimise), the vibration of the primary structure.

Furthermore, the acoustic black hole 2000 acts to control (namely to reduce) the flexural vibrations produced on the primary structure, by the vibration source 1390.

In the currently described embodiment the controller (H) controls the actuating force applied by the actuator 1312, to the acoustic black hole 2000, to control vibration of the primary structure using the following direct velocity feedback control:

$$c(n) = -H(z)e(n)$$

(6)

where c(η) is the control signal, e(η) is the error signal, η is the time index and H(z) is a simple gain.

However, it will be appreciated that any suitable controller may be used in place of H(z), being that either digital or analogue in nature.

It will be appreciated that any suitable type and arrangement of sensors and actuators may be used. In this respect, it will be appreciated that the upper and lower PZT patches could be reversed, i.e. the actuator provided on the lower surface and the sensor provided on the upper surface.

As stated above, the actuator 1312 is configured to apply the actuating force to the acoustic black hole 2000. This may advantageously act to control the vibrational energy in the acoustic black hole 2000, which may cause the actuator 1312 to have a greater damping effect. Accordingly, this may allow for a reduction in the size (and strength) of the actuator 1312, than would otherwise be required.

Furthermore, the use of the controller (H) and actuator 1312, to provide a controlled actuating force to the acoustic black hole 2000 may advantageously improve the low-frequency performance of the acoustic black hole 2000, which may allow for the use of structural damping, using an acoustic black hole, in a more effective way and in a wider variety of applications. It may also reduce resonances that would otherwise occur.

Referring to Figure 10 there is shown a structurally damped structure 1400 according to a fifth embodiment. The structurally damped structure 1400 is the same as the structurally damped structure 1300 of the fourth embodiment, except for the differences described below. Corresponding features are given corresponding reference numerals, but incremented by 100.

The structurally damped structure 1400, of the fifth embodiment, differs from that of the fourth embodiment in that a sensor 1460 is mounted on the primary structure 3010, configured to sense the vibration of the primary structure 3010. In the currently described embodiment the sensor 1460 is a PZT sensor. However, it will be appreciated that any suitable type of sensor may be used.

The sensor 1460 is located upstream of the upper PZT patch 1412 at the acoustic black hole 2000, i.e. upstream of the actuator 1412. The sensor 1460 is connected to the controller (which, in this embodiment, is designated as 'W') so as to provide a feed forward reference signal (r) to the controller (W) that corresponds to the vibrating movement of the primary structure 2000 at the location of the sensor 1460.

As with the fourth embodiment, the lower PZT patch 1414 provides a feedback error signal (e) (corresponding to the deflection of the acoustic black hole 2000) to the controller (W). However, in this embodiment, the feedback error signal (e) is used to vary the coefficients of the transfer function of the controller (W) such that the controller adapts so as to continue to minimise the vibration of the primary structure 3010. In this respect, the controller (W) is an adaptive controller.

The controller (W) is configured to output a control signal (c), in the form of an output voltage applied across the upper PZT patch 1412 in dependence on the received feedforward reference signal (r) and the feedback error signal (e) so as to control the vibration of the primary structure 3010. In this respect, the controller (W) is configured to minimise the vibration of the primary structure 3010.

In the currently described embodiment the controller (W) controls the vibration of the primary structure 3010 and this controller can be implemented using a Finite Impulse Response ( FIR) filter, where the coefficients can be updated as follows using the well-known filtered-reference least mean squares algorithm:

$$w(n + 1) = \gamma w(n) - \alpha r^{\mathrm{T}}(n)e(n) \qquad (7)$$

where w is the filter coefficient, n is the time index, $\alpha$ is the convergence gain, y is the leakage coefficient, r is the vector of current and past filtered-reference signals and e is the error signal.

However, it will be appreciated that any suitable controller may be used.

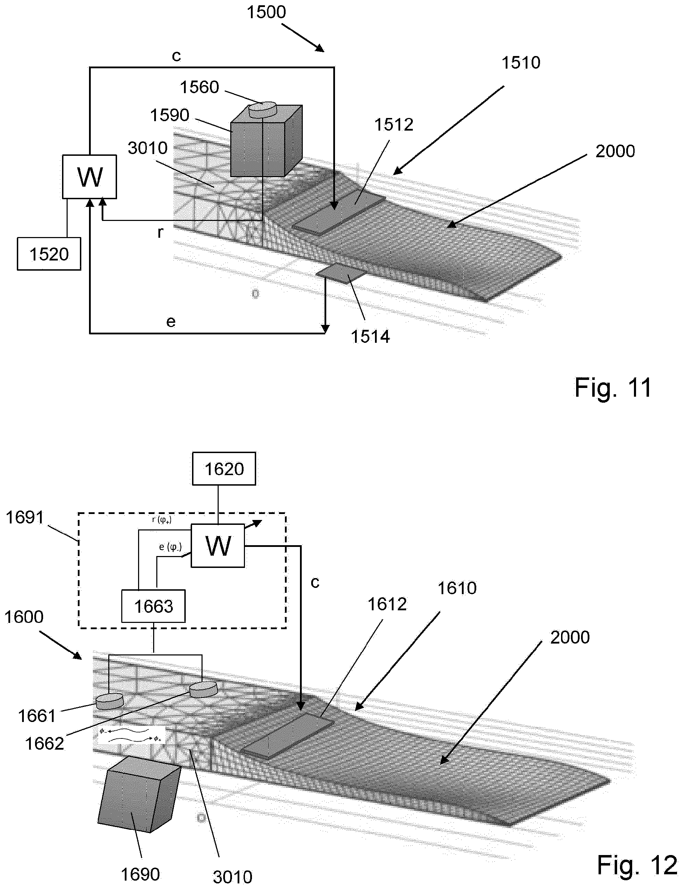

Referring to Figure 11 there is shown a structurally damped structure 1500 according to a sixth embodiment. The structurally damped structure 1500 is the same as the structurally damped structure 1400 of the fifth embodiment, except for the differences described below. Corresponding features are given corresponding reference numerals, but incremented by 100.

The structurally damped structure 1500, of the sixth embodiment, differs from that of the fifth embodiment in that the sensor 1560 is mounted on the vibration source 1590 and is configured to sense the vibration of the vibration source 1590 and to provide the sensed vibration as the feed-forward reference signal (r) to the controller (W).

As with the fifth embodiment, the adaptive controller (W) is configured to output a control signal (c), in the form of an output voltage applied across the upper PZT patch 1512 in dependence on the received feedforward reference signal (r) and the feedback error signal (e) so as to control the vibration of the primary structure 3010. In this respect, the controller (W) is configured to minimise the vibration of the primary structure 3010.

In the currently described embodiment the controller (W) controls the vibration of the primary structure 3010 using a corresponding control algorithm to that in the second embodiment.

However, it will be appreciated that any suitable controller may be used.

Referring to Figure 12 there is shown a structurally damped structure 1600 according to a seventh embodiment. The structurally damped structure 1600 is the same as the structurally damped structure 1400 of the fifth embodiment, except for the differences described below. Corresponding features are given corresponding reference numerals, but incremented by 2000 (relative to those of the fifth embodiment).

The structurally damped structure 1600, of the seventh embodiment, differs from that of the fifth embodiment in that the sensor 1460 is replaced with first and second sensors 1661, 1662 that are mounted on the primary structure 250, with the second sensor 1662 positioned downstream of the first sensor 1661. For the avoidance of doubt, downstream may be defined as downstream relative to a vibration generated by the vibration source, as said vibration propagates from the vibration source to the acoustic black hole.

The first and second sensors 1661, 1662 are PZT sensors that are configured to sense the displacement of the primary structure 3010 at their respective locations.

The controller 1691 comprises a control unit (W) and a wave decomposition unit 1663. The sensors 1661, 1662 are connected to the wave decomposition unit 1663 and the wave decomposition unit 1663 is configured to decompose the vibration of the primary structure 3010 into the incident and reflected wave components ($\phi$+ and $\phi$-). The incident component is used as the feedforward reference signal (r) and the reflected component is used as the feedback error signal (e).

In the described embodiment the lower PZT patch is not present and there is no feedback signal from a lower PZT patch, as in the preceding embodiments.

The control unit (W) is configured to output a control signal (c), in the form of an output voltage applied across the upper PZT patch 1612 in dependence on the received feedforward reference signal (r) and feedback error signal (e) so as to control the reflected wave from the ABH 2000. In this respect, the controller (W) is configured to attenuate the reflected wave from the ABH 2000. Accordingly the controller (W) acts to control the flexural wave in the primary structure 3010.

In the currently described embodiment the controller (W) controls the reflected wave from the ABH 2000 using the following control algorithm:

$$w(n+1) = \gamma w(n) - \alpha \phi_+^{\mathrm{T}}(n)\phi_-(n) \qquad (8)$$

where w is the filter coefficient, n is the time index, $\alpha$ is the convergence gain, y is the leakage coefficient, $\phi$_+is the vector of reference signals provided by the measured incident wave filtered by the plant response and $\phi$_- is the measured reflected wave.

However, it will be appreciated that any suitable control algorithm may be used.

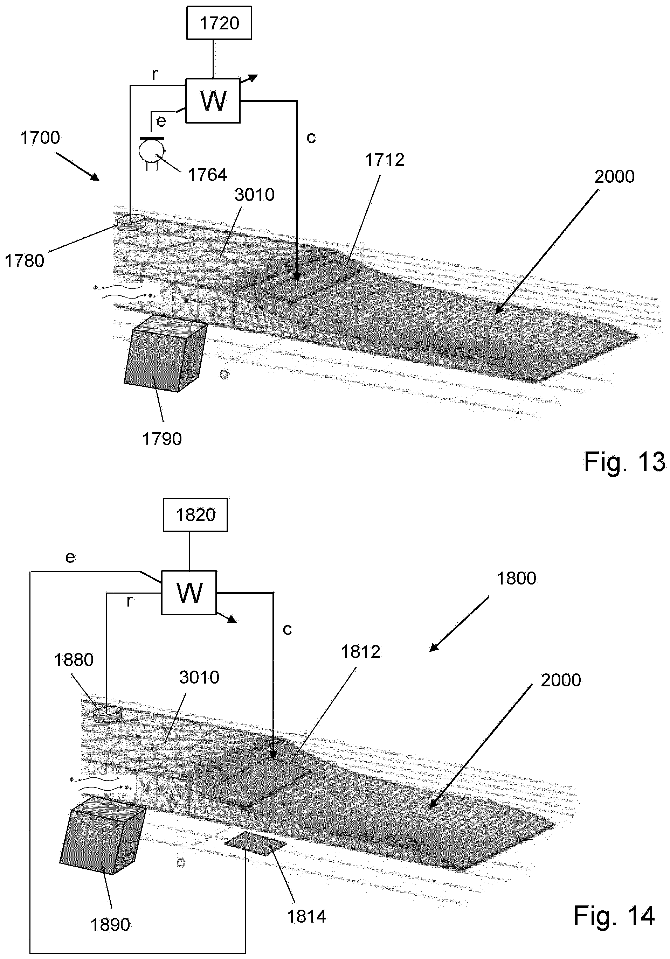

Referring to Figure 13 there is shown a structurally damped structure 1700 according to an eighth embodiment of the invention. The structurally damped structure 1700 is the same as the structurally damped structure 1600 of the seventh embodiment, except for the differences described below. Corresponding features are given corresponding reference numerals, but incremented by 100.

The structurally damped structure 1700, of the eighth embodiment, differs from that of the seventh embodiment in that the first and second sensors 1661, 1662 are replaced by an acoustic sensor, in the form of a microphone 1764, located in the radiated sound field of the primary structure 3010. In an alternative embodiment, multiple acoustic sensors may be used at different locations in the radiated sound field.

The microphone 1764 is connected to an input of the controller (W) and passes this sound signal, as an error signal (e), to the controller (W).

A movement sensor 1780 is mounted on the primary structure 3010 upstream of the actuator 1712 and provides a feedforward reference signal (r) to the controller (W).

The controller (W) is configured to output a control signal (c), in the form of an output voltage applied across the upper PZT patch 1712 in dependence on the feedforward reference signal (r) and on the error signal (e) so as to control the acoustic radiation from the primary structure 3010. In this respect, the controller (W) is configured to minimise the acoustic radiation from the primary structure 3010.

In the currently described embodiment the controller (W) controls the acoustic radiation from the primary structure 3010 using the same control algorithm as in the seventh embodiment (except that the error signal (e) is provided by the microphone 1764).

However, it will be appreciated that any suitable control algorithm may be used.

Referring to Figure 14 there is shown a structurally damped structure 1800 according to a ninth embodiment. The structurally damped structure 1800 is the same as the structurally damped structure 1700 of the eighth embodiment, except for the differences described below. Corresponding features are given corresponding reference numerals, but incremented by 100.

The structurally damped structure 1800, of the ninth embodiment, differs from that of the eighth embodiment in that the microphone 1764 is replaced with a PZT sensor 1814 mounted on the lower surface of the ABH 2000. The PZT sensor 1814 is configured to measure the displacement of the ABH 2000 and to provide a feedback error signal (e) to the controller (W).

The controller (W) is configured to output a control signal (c), in the form of an output voltage applied across the upper PZT patch 1812 in dependence on the received feedforward reference signal (r) and feedback error signal (e) so as to control the acoustic radiation from the primary structure 3010. In this respect, the controller (W) is configured to minimise the acoustic radiation from the primary structure 3010.

In the currently described embodiment the controller (W) controls the acoustic radiation from the primary structure 3010 using the following algorithm:

$$w(n + 1) = \gamma w(n) - \alpha r^{\mathrm{T}}(n)\mathbf{o}e(n) \qquad (9)$$

where w is the filter coefficient, n is the time index, $\alpha$ is the convergence gain, y is the leakage coefficient, r is the vector of current and past filtered-reference signals, e is the error signal and o is an observation filter that estimates the radiated sound field by suitably filtering the structural error sensor 1814.

However, it will be appreciated that any suitable control algorithm may be used.

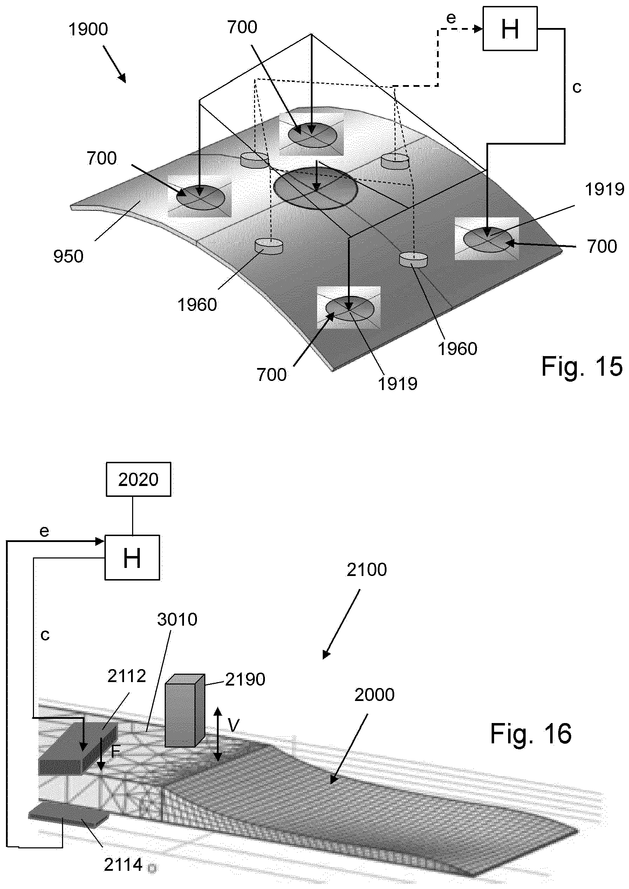

Referring to Figure 15 there is shown a structurally damped structure 1900 according to a tenth embodiment. In the tenth embodiment, the structurally damped structure 1900 comprises a plurality of acoustic black holes 700, each having a circular form, provided in primary structure 950, each acoustic black hole 700 and the primary structure 950 being as described in detail above. The acoustic black holes 700 each comprise one or more regions of different spatial property, as consistent with the description above. That is, the acoustic black hole 700 may be an acoustic black hole 2000 according to the first embodiment. Alternatively, the acoustic black holes may comprise variation from a first characteristic to a second characteristic, as described above. That is, the acoustic black holes may be an acoustic black hole 7000 according to the second embodiment.

However, it will be appreciated that any type of acoustic black hole may be used.

In the currently described embodiment there are five acoustic black holes 700, with an acoustic black hole 700 located in each corner of the upper surface of the primary structure 950 and a further acoustic black hole 700 located in the centre of the upper surface of the primary structure 950.

A plurality of displacement sensors 1960 are mounted on the upper surface of the primary structure 950, generally in the spaces between the acoustic black holes 700. Each sensor 1960 is a PZT sensor configured to detect the displacement of the primary structure 950 at the location of the sensor 1960. Each sensor in turn is connected to a controller (H) so as to provide a feedback error signal that corresponds to the deflection of the primary structure 950 at that location.

An actuator 1919, in the form of a PZT actuator, is provided at the centre of each acoustic black hole 700 (shown schematically by the vertical arrow 1919 at the centre of each acoustic black hole 700). The PZT actuator 700 is of a material that has an intrinsic level of damping and so provides a damping effect at the ABH 700.

The controller (H) is configured to control each actuator 1919 in dependence on the received error signals (e) from the sensors 1960 so as to provide structural damping of the primary structure 950.

In this respect, each ABH 700, coupled with the controller (H) and the actuating force applied by each actuator 1919 acts so as to control the vibration of the primary structure 950. The controller (H) is configured to minimise the vibration of the primary structure 950.

In the currently described embodiment, the controller (H) controls the vibration of the primary structure using the following centralised, fully coupled control law:

$$\mathbf{c}(n) = -\mathbf{H}(z)\mathbf{e}(n) \qquad (10)$$

where c(n) is the vector of control signals, H(z) is the transfer function describing the controller and e(n) is the vector of error signals.

However, it will be appreciated that any suitable control law, including centralised and decentralised formulations and digital and analogue implementations, may be used.

Alternatively, or additionally, the controller (H) may be configured to control the absorption of vibration of the primary structure 950 (e.g. by maximising the absorption of the vibration of the primary structure 950).

Referring to Figure 16 there is shown a structurally damped structure 2100 according to an eleventh embodiment of the invention. The structurally damped structure 2100 of the eleventh embodiment is the same as the structurally damped structure 1300 of the fourth embodiment, except for the differences described below. Corresponding features are given corresponding reference numerals, but incremented by 700.

The structurally damped structure 2100 of the eleventh embodiment is the same as the structurally damped structure 1300 of the fourth embodiment, except in that the upper and lower PZT patches 2112, 2114 are at a different location to the acoustic black hole 2100.

In this respect, the upper PZT patch 2112 is configured to apply the actuating force (F) to the structurally damped structure 2100 at a different location to the acoustic black hole 2000. This is advantageous in that the actuator does not reduce the acoustic black hole effect by loading the tapered part. It may also allow thinner taper tip heights to be used since the taper does not have to support the mass of the actuator and it allows the passive damping treatment to be optimised without constraints imposed by the collocation of the actuator with the taper.

Similarly, the lower PZT patch 2114 is configured to sense the movement of the primary structure 3010 at a different location to the acoustic black hole 2000.

In each of the described embodiments of structural dampers and structurally damped structures comprising structural dampers, the use of the controller and actuator(s), to provide a controlled actuating force to the acoustic black hole and/or primary structure may advantageously improve the low-frequency performance of an acoustic black hole, which may allow for the use of structural damping, using an acoustic black hole, in a more effective way and in a wider variety of applications. It may also reduce resonances that would otherwise occur.

Whilst the present invention has been described and illustrated with reference to particular embodiments of structural dampers and structurally damped structures comprising structural dampers, it will be appreciated by those of ordinary skill in the art that the invention lends itself to many different variations not specifically illustrated herein.

For example, in each of the described embodiments of structural dampers and structurally damped structures comprising structural dampers, any suitable corresponding type of sensor or actuator may be used. In this respect, the sensor(s) may be of any suitable type, including displacement sensor, a velocity sensor, a strain sensor, a vibration sensor, an accelerometer, etc. The actuator may be of any suitable type, including a PZT, an electro-magnetic actuator, a pneumatic or hydraulic actuator, etc.

In addition, the location, number and arrangement of the actuators and sensors may be varied and is not limited to that of the described embodiments of structural dampers and structurally damped structures comprising structural dampers.

In certain described embodiments of structural dampers and structurally damped structures comprising structural dampers, the actuator is configured to apply the actuating force to the acoustic black hole. Alternatively, it may be configured to apply the actuating force to a different location on the structurally damped structure, i.e. not at the acoustic black hole.

Any of the control/actuation/sensor arrangements of any of the above described embodiments of structural dampers and structurally damped structures comprising structural dampers may be combined, in any combination, to control one or more of the vibration of the primary structure, a flexural wave in the primary structure and the acoustic radiation from the primary structure.

The structurally damped structure 1800 of the tenth embodiment may have any of the sensor, actuator and control arrangements of any of the preceding embodiments so as to control the vibration, reflected wave and/or acoustic radiation from the primary structure.

In embodiments where the controller is an adaptive controller, a nonadaptive controller may be used instead (and vice-versa). However, use of an adaptive controller may be advantageous as it may provide improved damping that adapts to changing external conditions.

The primary structure of any of the embodiments described herein may be provided with a plurality of the respective structural dampers of that embodiment, so as to provide structural damping of the primary structure at multiple locations. Furthermore, the primary structure may be provided with a plurality of structural dampers that are a mixture of more than one of the described embodiments.

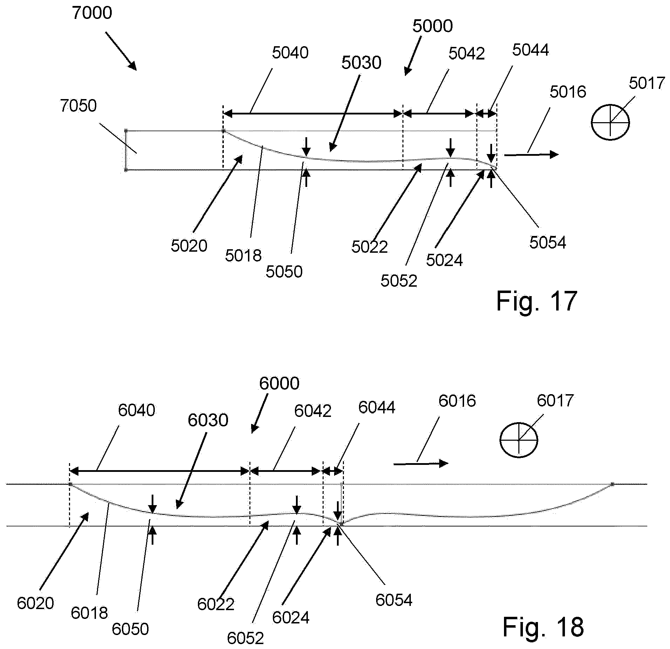

Referring to Figure 17, a cross section through an acoustic black hole 5000 is shown. The cross section may be a cross section through a "wedge-like" acoustic black hole (such as the first and second embodiment), or may be a cross section through a half of a circular (see Figure 18) acoustic black hole. The acoustic black hole 5000 comprises, in a first axis 5016, along a line 5018, a variation from a first characteristic (indicated generally at 5020) to a second characteristic (indicated generally at 5022) to a third characteristic (indicated generally at 5024). The variation is in the aforementioned order. The acoustic black hole 5000 comprises a taper 5030 from the first characteristic 5020 to the third characteristic 5024. The taper 5030 is along the line 5018. The second characteristic 5022 is a deviation from the taper 5030.

In this way, by the second characteristic deviating from the taper 5030, a fatigue resistance property of the acoustic black hole 5000 can be altered. The acoustic black hole 5000 may be more resistant to fatigue at the second characteristic, due to the deviation. Whilst conventional acoustic black holes taper according to a power law (see, for example, Equation 2 above), the acoustic black hole 5000 incorporates a taper and also a deviation from the taper 5030. The deviation may be provided along the taper 5030. The deviation may be provided proximal to, or in the region of, an end region or tip of the acoustic black hole 5000. In this way, the end region or tip of the acoustic black hole 5000 can be strengthened such that its fatigue life is increased.

It will be appreciated that the acoustic black holes 2000, 8000 of the first and second embodiment may be viewed as having a similar deviation from the taper, where the taper is viewed at a side or outer region of the acoustic black hole 2000, 8000. However, rather than the variation in a perpendicular second axis as in the first and second embodiment, the acoustic black hole 5000 need not comprise the same variation (e.g. in spatial property) in the second, perpendicular, axis.

It will be appreciated that the first characteristic 5020 and third characteristic 5024 may be proximal to the second characteristic 5022. That is, the first characteristic 5020 and third characteristic 5024 may be either side of the second characteristic 5022.

The first characteristic 5020 may be provided in a first region 5040. The second characteristic 5022 may be provided in a second region 5042. The third characteristic 5024 may be provided in a third region 5044. The regions may be distinct regions.

In this way, a second region 5042 of a second characteristic 5022 may be provided, where the acoustic black hole 5000 has improved fatigue resistance property in said region. That is, there may be a second region 5042 comprising a deviation from a taper (i.e., a deviation from a power law taper).

The characteristic 5020, 5022, 5024 may be one or more of: the gradient; the rate of change of gradient; an increase in the gradient or rate of change of the gradient; zero gradient; a plateau; a peak.

Providing a gradient deviation from the taper may lead to a change in spatial property (e.g., thickness) of the acoustic black hole 5000 relative to the conventional power law taper. Providing a deviation in the rate of change of gradient may lead to a change in spatial property (e.g., thickness) of the acoustic black hole 5000 relative to the conventional power law taper. Conventional acoustic black holes do not incorporate changes/deviation in rate of change of gradient of the taper, but rather have constant rate of change of gradient. Providing a zero gradient/point of inflection may lead to a change in spatial property (e.g., thickness) of the acoustic black hole 5000 relative to the conventional power law taper. Similar advantages are gained where the characteristic is a plateau or peak.

The characteristic 5020, 5022, 5024 may be a spatial property. The spatial property may be a thickness and/or shape. That is, the first characteristic 5020 may be a first thickness 5050, the second characteristic 5022 may be a second thickness 5052, and the third characteristic 5024 may be a third thickness 5054.

By providing a deviating thickness of the taper in, for example, the second region 5042, the acoustic black hole 5000 can be strengthened. By providing a deviating shape of the taper in, for example, the second region 5042, the acoustic black hole 5000 can be strengthened or its damping properties advantageously altered.

The second thickness 5052 (that is, the thickness of the acoustic black hole 5000 related to the second characteristic 5022 and/or second region 5042) may be greater than the first thickness 5050 (that is, the thickness of the acoustic black hole 5000 related to the first characteristic 5020 and/or first region 5040) and/or the third thickness 5054 (that is, the thickness of the acoustic black hole 5000 related to the third characteristic 5024 and/or third region 5044).

In this way, the thickness of the acoustic black hole 5000 is increased by the deviation from the taper 5030 of the second characteristic 5022. The acoustic black hole 5000 is thereby strengthened by the deviation, and its fatigue life is increased. In a specific example, the thickness of the taper increases in the second region 5042, which is contrary to conventional acoustic black holes which continually taper in thickness to their tip.

The second characteristic deviating from the taper may provide an increase in a fatigue resistance property of the acoustic black hole. That is, the deviation improves the fatigue resistance of the acoustic black hole 5000. The fatigue resistance of the acoustic black hole 5000 may be specifically improved at the second characteristic, or second region 5042 related to the second characteristic.

The characteristic may be a material and/or a material property. That is, the acoustic black hole 5000 may comprise a variation in materials along the taper 5030, and the second material may deviate from the first and/or third material. The material property may be a rigidity and/or density. In this way, a more rigid/dense material may provide the second characteristic which deviates from the taper from a first material rigidity/density to the third material rigidity/density. In a specific example, a more rigid material is provided in the second region 5042. This is contrary to conventional acoustic black holes which use the same material, or material property, for the entire taper, or do not increase the material property (e.g., rigidity/density) along the taper.

In a second axis 5017, perpendicular to the line, there may be no variation in the characteristic. That is, in the second axis, the characteristic (e.g., each characteristic) may remain constant. That is, the acoustic black hole may have constant characteristics when viewed in cross section along the first axis. This may simplify manufacture. Fatigue resistance of the acoustic black hole 5000 is improved.

In a second axis 5017, perpendicular to the line, there may be variation in the characteristic. This may relate to acoustic black holes 2000, 8000 of the type described in relation to the first embodiment and second embodiment. That is, the acoustic black holes 5000, 6000 may incorporate any or all features of the acoustic black holes 2000, 8000. The acoustic black hole 5000 is strengthened in outer (e.g., widthwards/ side) regions, but may comprise conventional power law taper in a central region. This may improve damping, whilst still improving fatigue resistance.

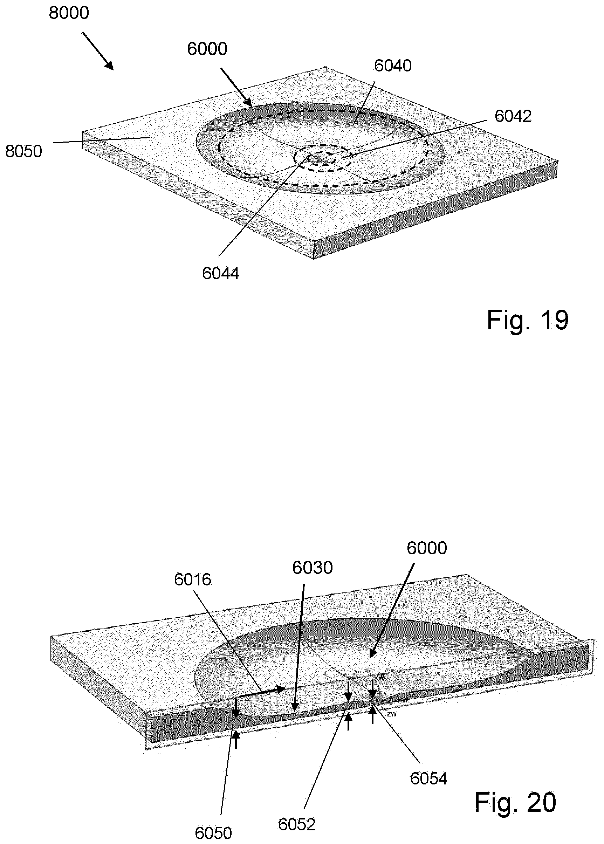

The acoustic black hole may have a circular form. The first axis may be a radial axis. The second axis may be an annular, or circumferential, axis. A cross section through a circular acoustic black hole 6000 is shown in Figures 18 to 20. The circular acoustic black hole is identical to the acoustic black hole 5000, apart from the features described here. Corresponding features are given corresponding reference numerals, incremented by 1000. That is, the description provided above in relation to acoustic black hole 5000 also applies to circular acoustic black hole 6000. It will be appreciated that the circular acoustic black holes comprises, in cross section, two tapers, one in a first direction and another in a second, opposite, direction. This profile may be rotated about a central axis to form an acoustic black hole 6000 having a circular form. Figures 19 and 20 show perspective views of the acoustic black hole 6000. Figure 20 shows a perspective cross section through the circular acoustic black hole 6000.

In the circular acoustic black hole 6000, the second characteristic 6022, or second region 6042, may be provided in an annular region 6042. In this way, a circular (in other words, 2D) acoustic black hole 6000 has improved fatigue resistance properties, whilst enabling damping of vibrations from multiple incident directions.

Figures 17 to 20 also show structurally damped structures 7000, 8000. Each structurally damped structure 7000, 8000 comprises an acoustic black hole 5000, 6000, the acoustic black hole being as described above and having a second characteristic which is a deviation from the taper, and a primary structure 7050, 8050. In Figure 17, the primary structure is a beam 7050. In Figures 18 to 20, the primary structure is a plate 8050.

Each acoustic black hole 5000, 6000 may be provided with a damping material provided on at least a region of the acoustic black hole.

Each acoustic black hole 5000, 6000 may be incorporated in a structural damper, as described herein. The structural damper comprises an acoustic black hole 5000, 6000; at least one sensor; an actuator configured to apply an actuating force to the primary structure and/or to the acoustic black hole; and a controller configured to control the actuator in dependence on a signal from the at least one sensor so as to provide structural damping of the primary structure.

In general, in one example, there is provided a combined example, where there is provided an acoustic black hole comprising: in a first axis, along a line, a variation from a first characteristic to a second characteristic to a third characteristic, wherein the acoustic black hole comprises a taper from the first characteristic to the third characteristic, and wherein the second characteristic is a deviation from the taper and in a second axis perpendicular to the first axis, and away from the line, one or more regions of different spatial property relative to a spatial property of the ABH at the line. Indeed, this combined example is shown in Figure 2.

In general, in another example, there is provided a combined example, where there is provided an acoustic black hole comprising: in a first axis, along a line, a variation from a first characteristic to a second characteristic to a third characteristic, wherein the acoustic black hole comprises a taper from the first characteristic to the third characteristic, and wherein the second characteristic is a deviation from the taper and in a second axis perpendicular to the first axis, and in a second axis different to the first axis, a variation from a first characteristic to a second characteristic, along the second axis. Indeed, this combined example is shown in Figure 7.

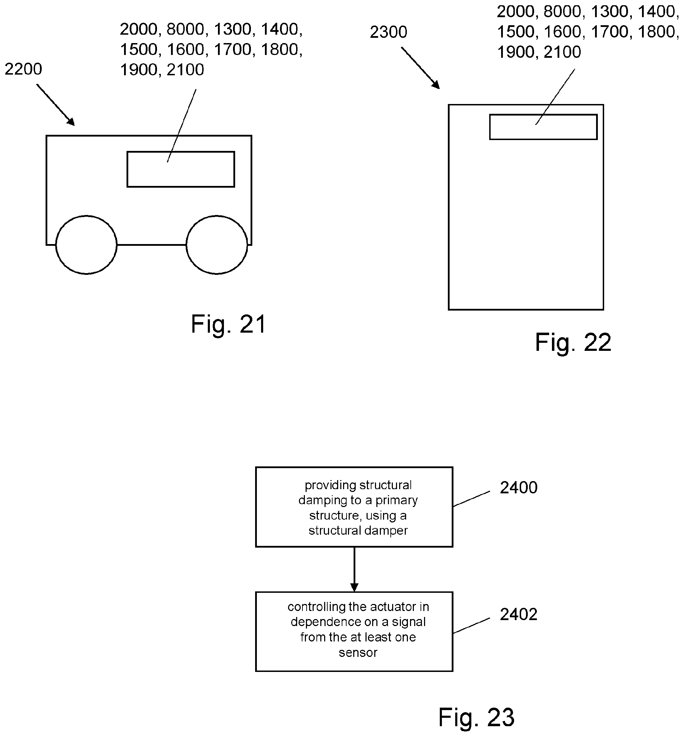

Referring to Figure 21, a vehicle 2200 is shown. The vehicle 2200 comprises an acoustic black hole, a structural damper, and/or a structurally damped structure, according to any of the embodiments described herein. The vehicle may be a land-based vehicle, watercraft, or aircraft.

Referring to Figure 22, a structure 2300 is shown. The structure comprises an acoustic black hole, a structural damper, and/or a structurally damped structure, according to any of the embodiments described herein. The structure may be a building, infrastructure, construction, or the like.

Referring to Figure 23, general methodology principles are shown. Step 2400 comprises providing structural damping to a primary structure, using a structural damper, the structural damper comprising: an acoustic black hole; at least one sensor; and an actuator configured to apply an actuating force to the primary structure and/or acoustic black hole. Step 2402 comprises controlling the actuator in dependence on a signal from the at least one sensor so as to provide structural damping of a primary structure. Optionally, the method comprises controlling the actuator to control at least one of: (a) the vibration of the primary structure; (b) a flexural wave in the primary structure; (c) the acoustic radiation from the primary structure.

**Claims**

1. An acoustic black hole comprising:

    in a first axis, a variation from a first characteristic to a second characteristic, along a line;
    in a second axis different to the first axis, a variation from a first characteristic to a second characteristic, along the second axis.

2. The acoustic black hole according to claim 1, wherein the variation in the first axis is an acoustic black hole taper.

3. The acoustic black hole according to claim 1 or claim 2, wherein, in the second axis, the acoustic black hole comprises one or more regions of second characteristic.

4. The acoustic black hole according to any one of the preceding claims, wherein, in the second axis, the second characteristic is different to a characteristic at the line along said second axis.

5. The acoustic black hole according to any one of the preceding claims, wherein the line is a centre line.

6. The acoustic black hole according to any one of the preceding claims, wherein the characteristic a material characteristic, optionally:

   a different material; and/or
   a rigidity and/or density of the material.

7. The acoustic black hole according to any one of the preceding claims, wherein, in the second axis, the rigidity and/or density increases from a first value to a second value.

8. The acoustic black hole according to any one of the preceding claims, wherein, in the second axis, in a first direction and a second, opposite, direction, the rigidity and/or density increases from a first value to a second value.

9. A structurally damped structure comprising:

   the acoustic black hole according to any one of the preceding claims; and
   a primary structure.

10. The structurally damped structure according to claim 9, wherein the primary structure is a beam or plate.

11. The structurally damped structure according to claim 9 or claim 10, wherein:

    the primary structure comprises:

       in the first axis, zero curvature;
       in the second axis, at least a region of concave or convex curvature,

    or the primary structure comprises:

       in the first axis, zero curvature;
       in the second axis, at least a region of concave or convex curvature,
       wherein the ABH is provided as only a portion of the structurally damped structure in the second axis,

    or the primary structure comprises:

       in the first axis, at least a region of concave or convex curvature;
       in a second axis, at least a region of concave or convex curvature.

12. The acoustic black hole according to any one of claims 1 to 8 or structurally damped structure according to any one of claims 9 to 11, wherein the second axis is perpendicular to the first axis.

13. The acoustic black hole or structurally damped structure according to any one of the previous claims, further comprising a damping material provided on at least a region of the acoustic black hole.

14. A method of manufacture of an acoustic black hole comprising:
    using multi-layer additive manufacturing to provide:
    an acoustic black hole comprising:

       in a first axis, a variation from a first characteristic to a second characteristic, along a line;
       in a second axis different to the first axis, a variation from a first characteristic to a second characteristic, along the axis.

15. A structural damper for providing structural damping to a primary structure comprising:

an acoustic black hole according to any one of claims 1 to 8;
at least one sensor;
an actuator configured to apply an actuating force to the primary structure and/or to the acoustic black hole; and
a controller configured to control the actuator in dependence on a signal from the at least one sensor so as to provide structural damping of the primary structure.

Fig. 1

Fig. 2

Fig. 3

Fig. 4

Fig. 5

(a)

(b)

Fig. 6

8000

7000

8010

7018

7036

7026

7016

7020

Fig. 7(a)

8000

7000

8010

7018

7036

7026

7016

7020

Fig. 7(b)

8100

using multi-layer additive manufacturing to provide: an acoustic black hole comprising: in a first axis, a variation from a first characteristic to a second characteristic, along a line; in a second axis different to the first axis, a variation from a first characteristic to a second characteristic, along the axis.

Fig. 8

c

1300

1390

3010

1310

1312

2000

H

1320

h(x)

F

e

1314

**Fig. 9**

c

1400

1490

1460

1412

1410

W

r

F

2000

1420

3010

e

1414

**Fig. 10**

Fig. 11

Fig. 12

Fig. 13

Fig. 14

Fig. 15

Fig. 16

Fig. 17

Fig. 18

8000

6000

6040

6042

8050

6044

Fig. 19

6016

6030

6000

6050

6052

6054

Fig. 20

2200

2000, 8000, 1300, 1400,
1500, 1600, 1700, 1800,
1900, 2100

Fig. 21

2300

2000, 8000, 1300, 1400,
1500, 1600, 1700, 1800,
1900, 2100

Fig. 22

| providing structural damping to a primary structure, using a structural damper | 2400 |

| controlling the actuator in dependence on a signal from the at least one sensor | 2402 |

Fig. 23

EP 4 270 376 A1

Europäisches Patentamt
European Patent Office
Office européen des brevets

**EUROPEAN SEARCH REPORT**

Application Number

EP 22 27 5055

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HOOK K ET AL: "Control of vibration in a plate using active acoustic black holes", SMART MATERIALS AND STRUCTURES, IOP PUBLISHING LTD., BRISTOL, GB, vol. 31, no. 3, 15 February 2022 (2022-02-15), XP020415917, ISSN: 0964-1726, DOI: 10.1088/1361-665X/AC51AE [retrieved on 2022-02-15] | 1-15 | INV.<br>G10K11/16<br>F01D25/04<br>F02C7/045<br>F02K1/82<br>F02K9/97<br>F42D5/05<br>F42D5/055 |
| Y | * abstract * <br> * paragraphs [0001] - [0003] * <br> ----- | 15 | ADD.<br>G10K11/178<br>B64C11/00<br>B64C23/00 |
| X | CN 212 694 826 U (QIU TIANZHENG; UNIV NANJING AERONAUTICS & ASTRONAUTICS) 12 March 2021 (2021-03-12) | 1-14 | B64C27/00 |
| Y | * figures 1-4 * <br> * paragraphs [0005] - [0013], [0031] - [0043] * <br> ----- | 15 | |
| X | ZHOU TONG ET AL: "Planar Swirl-shaped Acoustic Black Hole Absorbers for Multi-directional Vibration Suppression", JOURNAL OF SOUND AND VIBRATION, ELSEVIER, AMSTERDAM , NL, vol. 516, 28 September 2021 (2021-09-28), XP086852711, ISSN: 0022-460X, DOI: 10.1016/J.JSV.2021.116500 [retrieved on 2021-09-28] | 1-14 | |
| Y | * abstract * <br> * paragraphs [0002], [02.1], [0003], [03.1] * <br> ----- <br> -/-- | 15 | |

**TECHNICAL FIELDS SEARCHED (IPC)**

F42D
F01D
F02K
F02C
G10K
F16F
B64C

The present search report has been drawn up for all claims

| Place of search | Date of completion of the search | Examiner |
|---|---|---|
| The Hague | 11 October 2022 | Sartoni, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number

EP 22 27 5055

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 997 020 A (BUSNEL RENE-GUY ET AL) 14 December 1976 (1976-12-14) | 1-14 | |
| Y | * figures 2-5,7-9 * <br> * column 1, line 47 - column 2, line 65 * <br> * column 3, line 55 - column 4, line 34 * <br> * column 4, line 52 - column 5, line 27 * <br> ----- | 15 | |
| X | CN 106 023 978 A (UNIV NANJING AERONAUTICS & ASTRONAUTICS) 12 October 2016 (2016-10-12) | 1-14 | |
| Y | * figures 1-3 * <br> * paragraphs [0026] - [0030] * <br> ----- | 15 | |

TECHNICAL FIELDS SEARCHED (IPC)

The present search report has been drawn up for all claims

| Place of search | Date of completion of the search | Examiner |
|---|---|---|
| The Hague | 11 October 2022 | Sartoni, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 27 5055

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2022

| Patent document cited in search report | | Publication date | Patent family member(s) | | | Publication date |
|---|---|---|---|---|---|---|
| CN 212694826 | U | 12-03-2021 | NONE | | | |
| US 3997020 | A | 14-12-1976 | FR | 2289993 | A1 | 28-05-1976 |
| | | | US | 3997020 | A | 14-12-1976 |
| CN 106023978 | A | 12-10-2016 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Soviet Physics: Acoustics,* 1988, vol. 34 (3), 318-319

- *Journal of Sound and Vibration,* 2019, vol. 449, 368-388